# EUROPEAN PATENT APPLICATION

(11) **EP 4 814 925 A1**
(43) Date of publication of application: **30.09.2026**
(21) Application number: 26164270.6
(22) Date of filing: 12.03.2026
(51) Int. Cl.: G09B 7/00

(54) **LEARNING SUPPORT PROGRAM, AND SYSTEM**

(30) Priority: 24.03.2025 JP 2025047634
(71) Applicant: Casio Computer Co., Ltd., Tokyo 151-8543 (JP)
(72) Inventor: Kimura, Shunya, Hamura-shi, Tokyo, 205-8555 (JP)
(74) Representative: Grünecker Patent- und Rechtsanwälte PartG mbB

(57) **Abstract**

A learning support program instructs a processor of an information processing apparatus to execute: managing grade information indicating whether a user has correctly or incorrectly answered a question associated with a difficulty level, and adjusting the grade information by executing at least one of: deemed correct answer addition of adding, to the grade information, information indicating that the user has correctly answered a question with a second difficulty level lower than a first difficulty level a second predetermined number of times corresponding to a first predetermined number of times in which the user has correctly answered the question with the first difficulty level the first predetermined number of times, and deemed incorrect answer addition of adding, to the grade information, information indicating that the user has incorrectly answered a question with a fourth difficulty level higher than a third difficulty level a fourth predetermined number of times corresponding to a third predetermined number of times in which the user has incorrectly answered the question with the third difficulty level the third predetermined number of times.

## Description

### TECHNICAL FIELD

The disclosure of the present specification relates to a learning support program, and a system including a learning support apparatus that supports learning of a user.

### BACKGROUND

A learning system that gives a question to a user (learner) and scores an answer from the user has become widespread. For example, JP 1-245284 A proposes a method of determining whether or not answer data transmitted from each learner is a correct answer, calculating a score and a correct answer proportion from the number of correct answers of a test, calculating an average value, a standard deviation, and a deviation value from the score and the like, displaying answer data for each question, and outputting a score, a deviation value, and the like of each learner.

### SUMMARY

In order to increase the learning efficiency using the method as described above, it is preferable that the learning system estimates a comprehension level of each question for each user, and a question with a difficulty level corresponding to the comprehension level is asked. For example, when the comprehension level corresponding to a question with a certain difficulty level is estimated to be sufficiently high, the learning level of the user is efficiently improved by asking a question with a higher difficulty level. That is, in order to accurately estimate the user's comprehension level, it is necessary to obtain a large number of answers by asking a large number of questions.

An object according to one aspect of the present invention is to provide a learning support method capable of adjusting grade data having a small number of answers such that a user's comprehension level can be accurately estimated.

A learning support program according to an embodiment of the present disclosure instructs a processor of an information processing apparatus to execute: managing grade information indicating whether a user has correctly or incorrectly answered a question associated with a difficulty level, and adjusting the grade information by executing at least one of: deemed correct answer addition of adding, to the grade information, information indicating that the user has correctly answered a question with a second difficulty level lower than a first difficulty level a second predetermined number of times corresponding to a first predetermined number of times in which the user has correctly answered the question with the first difficulty level the first predetermined number of times, and deemed incorrect answer addition of adding, to the grade information, information indicating that the user has incorrectly answered a question with a fourth difficulty level higher than a third difficulty level a fourth predetermined number of times corresponding to a third predetermined number of times in which the user has incorrectly answered the question with the third difficulty level the third predetermined number of times.

### BRIEF DESCRIPTION OF THE DRAWINGS

FIG. 1 is a diagram showing an example of a functional configuration of an information processing apparatus according to an embodiment of the present disclosure;
FIG. 2 is a diagram showing an example of grade information;
FIG. 3A is a diagram showing an example of a case where a deemed correct answer is added to grade information;
FIG. 3B is a diagram showing an example of a case where a deemed correct answer is added to the grade information;
FIG. 3C is a diagram showing an example of a case where a deemed correct answer is added to the grade information;
FIG. 4A is a diagram showing an example of a case where a deemed incorrect answer is added to the grade information;
FIG. 4B is a diagram showing an example of a case where a deemed incorrect answer is added to the grade information;
FIG. 4C is a diagram showing an example of a case where a deemed incorrect answer is added to the grade information;
FIG. 5 is a flowchart showing an example of a learning support method according to an embodiment of the present disclosure;
FIG. 6A is a flowchart showing an example of a method of asking a question to a user by using grade information;
FIG. 6B is a flowchart showing an example of a method of asking a question to a user by using grade information;
FIG. 7 is a diagram showing an example of a communication system according to a variation of the embodiment of the present disclosure; and
FIG. 8 is a diagram showing an example of a hardware configuration of the information processing apparatus.

### DETAILED DESCRIPTION

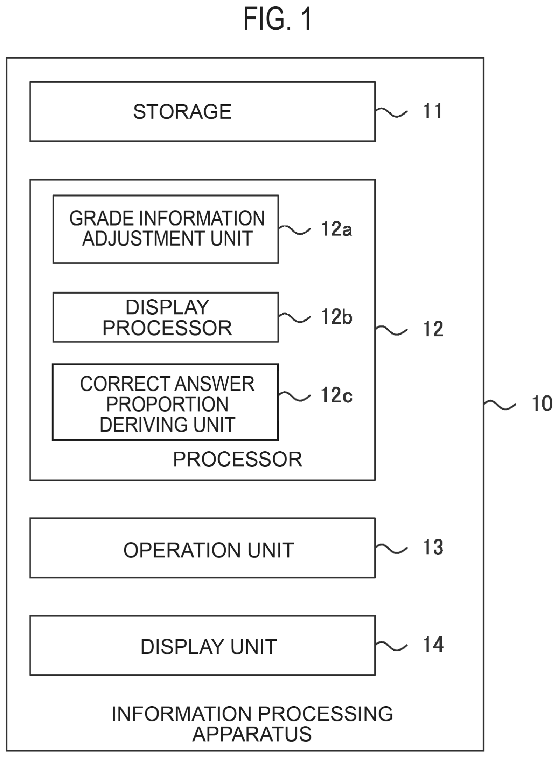

An information processing apparatus 10 according to the embodiment of the present disclosure can operate as a learning support apparatus that supports learning of a user. The user answers a question asked by the information processing apparatus 10, and the information processing apparatus 10 determines whether the answer of the user is a correct answer or an incorrect answer. The information processing apparatus 10 is not particularly limited, and is, for example, a personal computer, a smartphone, a tablet, or personal digital assistants (PDA). As shown in FIG. 1, the information processing apparatus 10 includes a storage 11 as at least one memory, a processor (first processor) 12 as at least one processor, an operation unit 13, and a display unit 14. Note that the information processing apparatus 10 may further have other functions not shown in FIG. 1. For example, the information processing apparatus 10 may have a function for communicating with other devices via a network.

The storage 11 stores a program executed by the processor 12 of the information processing apparatus 10 (including a learning support program according to an embodiment of the present disclosure). In addition, the storage 11 stores question data indicating questions that the information processing apparatus 10 asks. The questions are grouped by difficulty levels. That is, the difficulty level is set in advance for each question. The difficulty level may be set by a creator of a question. Alternatively, the difficulty level may be determined for each question by analyzing a correct answer proportion or the like of answers when the question was asked to another user in the past. In addition, grade information is stored in the storage 11. The grade information indicates whether the user has correctly or incorrectly answered the question associated with the difficulty level.

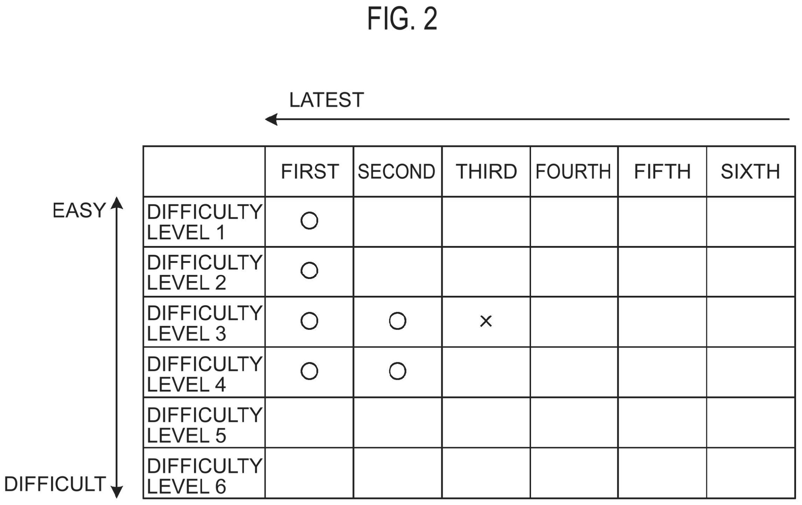

As shown in FIG. 2, the grade information indicates whether the answer of the user to the question asked by the information processing apparatus 10 is a correct answer or an incorrect answer for each difficulty level. "∘" indicates that the answer is a correct answer, and "×" indicates that the answer is an incorrect answer. In this embodiment, the questions provided by the information processing apparatus 10 are grouped into six difficulty levels, and "difficulty level 1" is the lowest difficulty level and "difficulty level 6" is the highest difficulty level. In addition, as the grade information, correct/incorrect results for the question asked most recently at the current time are recorded. For example, in the field corresponding to "first", a result of a question that was most recently asked in the past from the current time is recorded, and in the field corresponding to "second", a result of a question that was second most recently asked in the past from the current time is recorded. Note that, in the case shown in FIG. 2, the user correctly answers the questions with difficulty level 1 and difficulty level 2 one by one. Furthermore, the user has incorrectly answered the question with difficulty level 3, and then has correctly answered two questions with difficulty level 3 in succession. Further, the user correctly answers two questions with difficulty level 4 in succession.

The processor 12 controls an operation of the information processing apparatus 10. That is, the processor 12 controls the operation of the information processing apparatus 10 according to an operation of the user received by the operation unit 13. Furthermore, the processor 12 controls the operation of the information processing apparatus 10 by executing the program stored in the storage 11. Furthermore, the processor 12 includes a grade information adjustment unit (grade information adjustment means) 12a, a display processor (display control means) 12b, and a correct answer proportion deriving unit (correct answer proportion deriving means) 12c. Note that the processor 12 may further include other functions not shown in FIG. 1.

The grade information adjustment unit 12a manages the above-described grade information, updates the grade information each time an answer of the user is received, and adjusts content of the grade information in response to detecting a predetermined trigger. For example, the grade information adjustment unit 12a may execute, when the user has correctly answered the question with a first difficulty level a first predetermined number of times, a deemed correct answer addition process of adding, to the grade information, information indicating that the user has correctly answered the question with a second difficulty level that is a difficulty level lower than the first difficulty level a second predetermined number of times corresponding to the first predetermined number of times. Furthermore, the grade information adjustment unit 12a may execute, when the user has incorrectly answered the question with a third difficulty level a third predetermined number of times, a deemed incorrect answer addition process of adding, to the grade information, information indicating that the user has incorrectly answered the question with a fourth difficulty level that is a difficulty level higher than the third difficulty level a fourth predetermined number of times corresponding to the third predetermined number of times. Note that the grade information adjustment unit 12a may only execute one of the deemed correct answer addition process and the deemed incorrect answer addition process, or may execute both the deemed correct answer addition process and the deemed incorrect answer addition process. Specific examples of the deemed correct answer addition process and the deemed incorrect answer addition process will be described later.

The display processor 12b displays the processing result of the processor 12 on the display unit 14. For example, the display processor 12b may display the above-described grade information on the display unit 14. That is, the display processor 12b may display the correct/incorrect status of the answer to the question by the user on the display unit 14. The correct answer proportion deriving unit 12c derives a correct answer proportion for each difficulty level on the basis of the grade information. In this case, the display processor 12b may display a question with a difficulty level one level higher than the difficulty level corresponding to which the correct answer proportion is the highest on the display unit 14. Furthermore, the display processor 12b may display a question with a difficulty level corresponding to which the correct answer proportion is the lowest on the display unit 14.

The operation unit 13 is an input device included in the information processing apparatus 10, and is, for example, a keyboard, a pointing device such as a mouse, a touch panel, and/or a microphone. When receiving the operation of the user, the operation unit 13 transmits an instruction caused by the operation to the processor 12. As a result, the processor 12 can control the operation of the information processing apparatus 10 according to the operation of the user. The display unit 14 is a display device, and displays a processing result of the processor 12 in accordance with an instruction from the display processor 12b. Note that the display unit 14 may be implemented as a part of the information processing apparatus 10. Furthermore, the display unit 14 may be a display device connected to the information processing apparatus 10.

Next, a procedure of adjusting grade information will be described. In this embodiment, it is assumed that the grade information adjustment unit 12a adjusts the grade information according to the following adjustment rule.
(1) When the user has correctly answered the question with the first difficulty level "N1 (where N1 = 3) times" in succession, information indicating that the user has correctly answered the question with each difficulty level lower than the first difficulty level "N2 (where N2 = 3) times" is added.
(2) When the user has incorrectly answered the question with the third difficulty level "M1 (where M1 = 3) times" in succession, information indicating that the user has incorrectly answered the question with each difficulty level higher than the third difficulty level "M2 (M2=3) times" is added.

Note that the adjustment rule (1) defines a deemed correct answer addition process, and the adjustment rule (2) defines a deemed incorrect answer addition process. In the adjustment rule (1), it is assumed that the correct answer number N1 does not include the deemed correct answer added through the deemed correct answer addition process. N2 represents the number of deemed correct answers added by the deemed correct answer addition process, and may thus be referred to as a "deemed correct answer number". In the adjustment rule (2), it is assumed that the incorrect answer number M1 does not include a deemed incorrect answer added through the deemed incorrect answer addition process. M2 represents the number of deemed incorrect answers added by the deemed incorrect answer addition process, and may thus be referred to as a "deemed incorrect answer number".

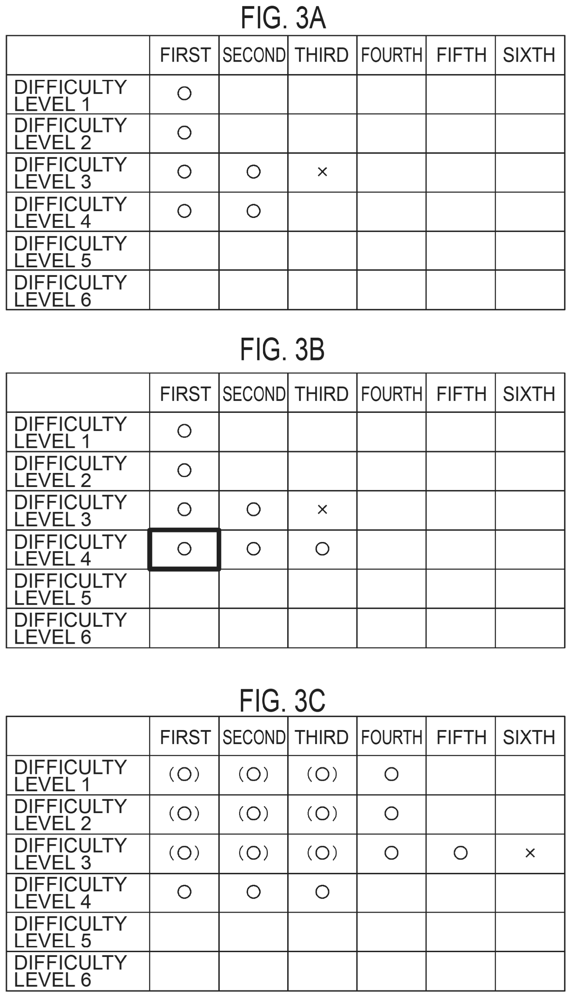

For example, it is assumed that the grade information shown in FIG. 3A is obtained. This grade information is obtained when the user has correctly answered one question with difficulty level 1 and one question with difficulty level 2, has incorrectly answered one of the questions with difficulty level 3, then has correctly answered two of the questions in succession, and has correctly answered two of the questions with difficulty level 4 in succession. The grade information is stored in the storage 11. Subsequently, the information processing apparatus 10 asks a question with difficulty level 4, and the user answers the question. It is assumed that the answer is a correct answer. In this case, the result of the new answer is added to the grade information. Specifically, as highlighted in FIG. 3B, information indicating a correct answer is recorded in the "first" field corresponding to difficulty level 4. Note that the two pieces of correct/incorrect information previously obtained for difficulty level 4 are shifted to the second and third fields, respectively.

When the grade information is updated as described above, the grade information adjustment unit 12a detects that the user has made three correct answers in succession at difficulty level 4. That is, a condition for executing the adjustment rule (1) corresponding to the deemed correct answer addition process is satisfied. The grade information adjustment unit 12a adjusts the grade information according to the adjustment rule (1). Specifically, the grade information adjustment unit 12a adds, to the grade information, information indicating that the user has correctly answered three questions, the questions having a difficulty level lower than the difficulty level with which the user has correctly answered three questions in succession by executing the deemed correct answer addition process. In this embodiment, since the user has correctly answered three questions in succession at difficulty level 4, information (that is, a deemed correct answer) indicating that the user has correctly answered the three questions at each of difficulty levels 1 to 3 is added to the grade information. In this case, the deemed correct answer is added to the grade information as the latest correct/incorrect information. That is, the deemed correct answer is added to the first to third fields at difficulty levels 1 to 3. As a result, the grade information is updated from the state shown in FIG. 3B to the state shown in FIG. 3C. Note that "(o)" shown in FIG. 3C indicates a "deemed correct answer" added through the deemed correct answer addition process.

As described above, in the learning support provided by the information processing apparatus 10, when the condition for implementing the adjustment rule (1) is satisfied, a deemed correct answer is added to the grade information. As a result, the estimation accuracy of the user's comprehension level is enhanced. In other words, if the addition of the deemed correct answer is not performed, the user's comprehension level is estimated on the basis of the grade information shown in FIG. 3B. In this case, the correct answer proportion for difficulty level 3 is 67% (two out of three questions are correct answers), and it is difficult to determine whether or not the user sufficiently understands the questions with difficulty level 3. For example, in a case where it is determined that a question with a certain difficulty level is sufficiently understood when the correct answer proportion for the difficulty level exceeds 80%, it is determined that the user does not sufficiently understand the questions with difficulty level 3. In addition, since the number of answers (in FIG. 3B, three) for difficulty level 3 is small, it is difficult to determine whether the questions with difficulty level 3 have not been actually sufficiently understood, whether an incorrect answer has been made even though the questions with difficulty level 3 have been sufficiently understood, or whether the comprehension level has increased after the incorrect answer.

In contrast, in the embodiment of the present disclosure, the user's comprehension level is estimated on the basis of the grade information shown in FIG. 3C. In this case, since the correct answer proportion for difficulty level 3 is 83% (five out of six questions are correct) and exceeds 80%, it can be determined that the user sufficiently understands the questions with difficulty level 3. In addition, although only three questions are actually asked to the user, grade information substantially equivalent to that when six questions are asked can be obtained. Therefore, according to the embodiment of the present disclosure, even in a case where the number of questions actually asked to the user is small, the user's comprehension level can be accurately estimated, so that the learning efficiency of the user is improved.

Note that, according to the grade information before adjustment shown in FIG. 3B, the correct answer proportion for difficulty level 3 is 67%, but the correct answer proportion for difficulty level 4 is 100%. In this situation, it is considered that the academic ability has improved to the extent that the question with difficulty level 4 can be solved for reasons such as "I have studied and understood" after having incorrectly answered the question with difficulty level 3 in the past. Therefore, in the embodiment of the present disclosure, as shown in FIG. 3C, by adding three deemed correct answers to each of the results of difficulty levels 1 to 3, the correct answer proportion for difficulty level 3 after adjustment increases to 83%. Furthermore, the correct answer proportion for the most recent five answers considered to represent the current comprehension level is 100%. Therefore, it is considered that the grade information obtained by adding the deemed correct answer roughly accurately represents the current user's comprehension level.

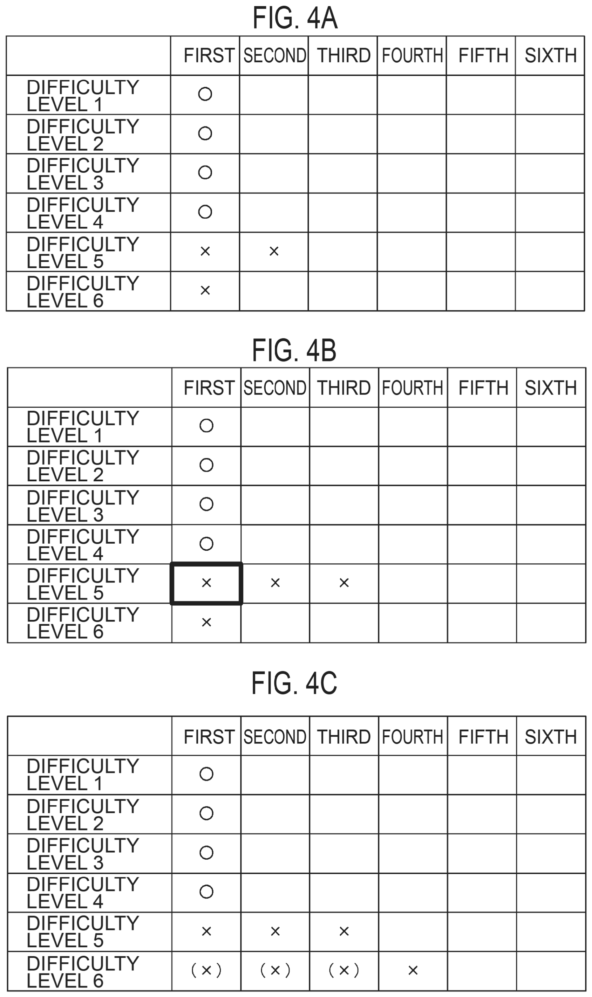

As another example, it is assumed that the grade information shown in FIG. 4A is obtained. This grade information is obtained when the user has correctly answered each of questions with difficulty levels 1 to 4, has incorrectly answered two questions with difficulty level 5, and has incorrectly answered one question with difficulty level 6. Subsequently, the information processing apparatus 10 asks a question with difficulty level 5, and the user answers the question. It is assumed that the answer is an incorrect answer. In this case, the result of the new answer is added to the grade information. Specifically, as highlighted in FIG. 4B, information indicating an incorrect answer is recorded in the "first" field corresponding to difficulty level 5. Note that the two pieces of correct/incorrect information previously obtained for difficulty level 5 are shifted to the second and third positions, respectively.

When the grade information is updated as described above, the grade information adjustment unit 12a detects that the user has incorrectly answered three questions in succession at difficulty level 5. In other words, a condition for executing the adjustment rule (2) corresponding to the deemed incorrect answer addition process is satisfied. The grade information adjustment unit 12a adjusts the grade information according to the adjustment rule (2). Specifically, the grade information adjustment unit 12a adds, to the grade information, information indicating that the user has incorrectly answered three questions with a difficulty level higher than the difficulty level with which the user has incorrectly answered three questions in succession by executing the deemed incorrect answer addition process. In this embodiment, since the user has incorrectly answered three questions in succession at difficulty level 5, information (that is, a deemed incorrect answer) indicating that the user has incorrectly answered three questions at difficulty level 6 is added to the grade information. In this case, the deemed incorrect answer is added to the grade information as the latest correct/incorrect information. That is, the deemed incorrect answer is added to the first to third fields at difficulty level 6. As a result, the grade information is updated from the state shown in FIG. 4B to the state shown in FIG. 4C. "(×)" shown in FIG. 4C indicates a "deemed incorrect answer" added through the deemed incorrect answer addition process.

As described above, in the learning support provided by the information processing apparatus 10, when the condition for implementing the adjustment rule (2) is satisfied, a deemed incorrect answer is added to the grade information. As a result, similarly to the case where a deemed correct answer is added to the grade information, the user's comprehension level can be accurately estimated with a small number of questions, so that the learning efficiency of the user is improved. As a result, appropriate feedback or guidance can be promptly provided to the user. That is, according to the information processing apparatus 10, it is possible to reliably support the user to execute a technical task (accurately estimate the user's comprehension level with a small number of questions) by an interaction process between the user and a machine. Furthermore, in the configuration in which the display processor 12b displays the grade information on the display unit 14, the user can visually recognize his/her own comprehension level and the progress of learning for each difficulty level.

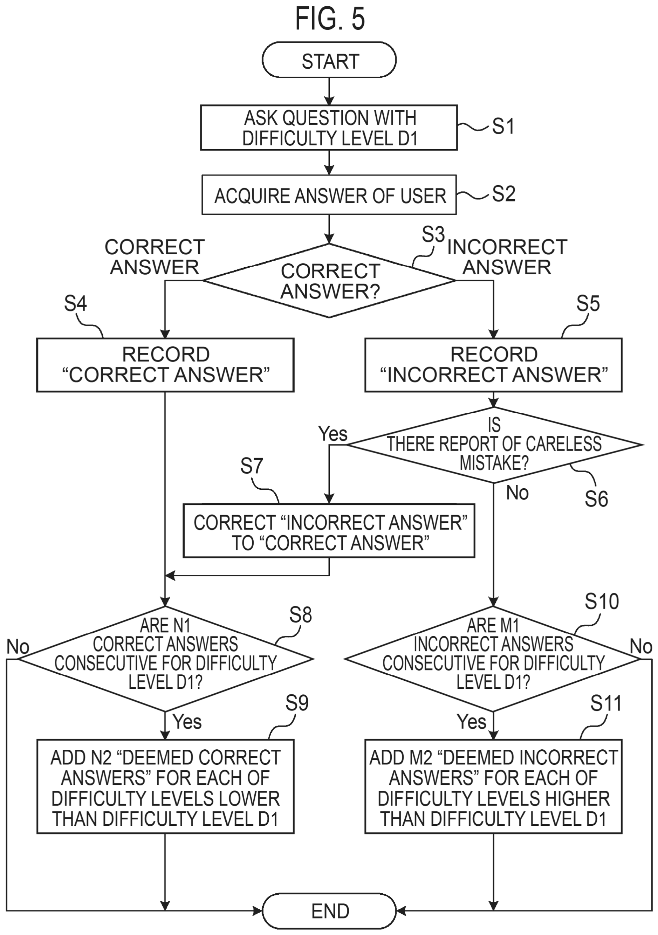

Next, a learning support method according to the embodiment of the present disclosure will be described with reference to a flowchart shown in FIG. 5. The processing in this flowchart is started, for example, when the user requests the information processing apparatus 10 to ask a question with a desired difficulty level. Alternatively, in a case where the information processing apparatus 10 ascertains the progress status of learning of the user, a difficulty level of a question to be asked by the information processing apparatus 10 may be determined.

In S1, the processor 12 asks the user a question with a difficulty level D1. The difficulty level D1 represents any one of the plurality of difficulty levels in the description of this flowchart. The question is displayed on the display unit 14. The user answers the question by using the operation unit 13. In S2, the processor 12 acquires an answer of the user. In S3, the processor 12 determines whether the answer of the user is a correct answer or an incorrect answer. If the answer of the user is a correct answer, the grade information adjustment unit 12a records "correct answer" in the record corresponding to the difficulty level D1 in S4. On the other hand, if the answer of the user is an incorrect answer, the grade information adjustment unit 12a records "incorrect answer" in the record corresponding to the difficulty level D1 in S5.

When the answer of the user is an incorrect answer, in S6, the grade information adjustment unit 12a inquires of the user whether the user has not understood the question or has made an incorrect answer even though the user has understood the question. That is, the grade information adjustment unit 12a inquires of the user whether or not the cause of the incorrect answer is a careless mistake. In this case, the display processor 12b generates an inquiry screen for inquiring the user whether or not the cause of the incorrect answer is a careless mistake in accordance with an instruction from the grade information adjustment unit 12a, and displays the inquiry screen on the display unit 14. In response to this, the user uses the inquiry screen displayed on the display unit 14 to report whether or not the cause of the incorrect answer is a careless mistake. In addition, the grade information adjustment unit 12a waits for the user's report using the inquiry screen.

When the report indicating that "the cause of the incorrect answer is a careless mistake" is received from the user, the grade information adjustment unit 12a changes the correct/incorrect information corresponding to the question for which the answer is acquired in S2 from "incorrect answer" to "correct answer" in S7. That is, the grade information corresponding to the question that the user has been incorrectly answered is changed to the content indicating that a correct answer has been made. When there is no report indicating that "the cause of the incorrect answer is a careless mistake", the process in S7 is skipped. As described above, when the user has made an incorrect answer although the user has understood the question, the grade information is updated assuming that the user has correctly answered the question. Therefore, the accuracy of estimating the user's comprehension level is improved.

When the "correct answer" is recorded in the grade information in S4 or when the "incorrect answer" is changed to the "correct answer" in S7, the grade information adjustment unit 12a determines whether N1 "correct answers" are consecutive at the difficulty level D1 in S8. In this case, the grade information adjustment unit 12a counts the number of "correct answers" obtained when questions are actually asked to the user, and does not count a "deemed correct answer". Note that N1 is the number of correct answers defined in the condition for performing the deemed correct answer addition process, and is "3" in the embodiment shown in FIG. 3. When N1 "correct answers" are consecutive at the difficulty level D1, the grade information adjustment unit 12a executes the deemed correct answer addition process in S9. That is, the grade information adjustment unit 12a adds N2 "deemed correct answers" at each difficulty level lower than the difficulty level D1. N2 is "3" in the embodiment shown in FIG. 3.

When the "incorrect answer" is recorded in the grade information in S5 and the user does not report a careless mistake in S6, the grade information adjustment unit 12a determines whether M1 "incorrect answers" are consecutive at the difficulty level D1 in S10. In this case, the grade information adjustment unit 12a counts the number of "incorrect answers" obtained when questions are actually asked to the user, and does not count a "deemed incorrect answer". Note that M1 is the number of incorrect answers defined in the condition for performing the deemed incorrect answer addition process, and is "3" in the embodiment shown in FIG. 4. When M1 "incorrect answers" are consecutive at the difficulty level D1, the grade information adjustment unit 12a executes the deemed incorrect answer addition process in S11. That is, the grade information adjustment unit 12a adds M2 "deemed incorrect answers" at each difficulty level higher than the difficulty level D1. M2 is "3" in the embodiment shown in FIG. 4.

In the embodiment shown in FIG. 5, when the user reports that the cause of the incorrect answer is a careless mistake, the answer to the question is processed as a correct answer, but this procedure is not essential in the embodiment of the present disclosure. That is, the learning support method according to the embodiment of the present disclosure need not execute S6 and S7.

In the embodiment described with reference to FIG. 3, the deemed correct answer number N2 indicating the number of deemed correct answers added in the deemed correct answer addition process is the same as the correct answer number N1 defined in the condition for performing the deemed correct answer addition process. Furthermore, in the embodiment described with reference to FIG. 4, the deemed incorrect answer number M2 indicating the number of deemed incorrect answers added in the deemed incorrect answer addition process is the same as the incorrect answer number M1 defined in the condition for performing the deemed incorrect answer addition process. However, the embodiment of the present disclosure is not limited to such a configuration. That is, "N1 = N2" or "M1 = M2" need not be satisfied. For example, if the deemed correct answer number N2 is set to be smaller than the correct answer number N1, and the deemed incorrect answer number M2 is set to be smaller than the incorrect answer number M1, the influence of the adjustment of the grade information can be reduced.

In the above-described embodiment, the correct answer number N1 and the incorrect answer number M1 are fixed values, but the embodiment of the present disclosure is not limited to such a configuration. That is, the correct answer number N1 and the incorrect answer number M1 need not be fixed values. For example, as the number of answers of the user increases, the amount of grade information to be accumulated also increases, so that the estimation accuracy of the user's comprehension level increases. That is, as the number of answers of the user increases, the necessity of adjusting the grade information decreases. Therefore, as the number of answers of the user increases, the values of the correct answer number N1 and the incorrect answer number M1 may be increased to make it difficult to adjust the grade information. As a result, in a case where the estimation accuracy of the comprehension level increases with an increase in the number of answers, the influence of adjustment can be reduced.

That is, the grade information adjustment unit 12a may increase the value of the correct answer number N1 in a case where the number of answers of the user in the grade information exceeds a predetermined threshold and the deemed correct answer addition process is executed. For example, the correct answer number N1 may be increased by one every time the number of answer of the users increases by five times. In this case, every time the number of answers of the user increases by five times, a new number of correct answers (a fifth predetermined number of times) is calculated. Similarly, the grade information adjustment unit 12a may increase the value of the incorrect answer number M1 in a case where the number of answers of the user in the grade information exceeds a predetermined threshold and the deemed incorrect answer addition process is executed. For example, the incorrect answer number M1 may be increased by one every time the number of answer of the users increases by five times. In this case, every time the number of answers of the user increases by five times, a new number of incorrect answers (a sixth predetermined number of times) is calculated.

Alternatively, the grade information adjustment unit 12a may decrease the value of the deemed correct answer number N2 when the number of answers of the user in the grade information exceeds a predetermined threshold and the deemed correct answer addition process is executed. For example, every time the number of answers of the user increases by five times, the deemed correct answer number N2 may be decreased by one. In this case, every time the number of answers of the user increases by five times, a new deemed correct answer number N2 is calculated. Similarly, the grade information adjustment unit 12a may decrease the value of the deemed incorrect answer number M2 in a case where the number of answers of the user in the grade information exceeds a predetermined threshold and the deemed incorrect answer addition process is executed. For example, every time the number of answers of the user increases by five times, the deemed incorrect answer number M2 may be increased by one. In this case, every time the number of answers of the user increases by five times, a new deemed incorrect answer number M2 is calculated.

The information processing apparatus 10 may set learning content to be provided to the user by using the above-described grade information. Here, when the deemed correct answer addition process or the deemed incorrect answer addition process is executed, the information processing apparatus 10 sets the learning content by using the grade information in which the number of correct answers or the number of incorrect answers is adjusted.

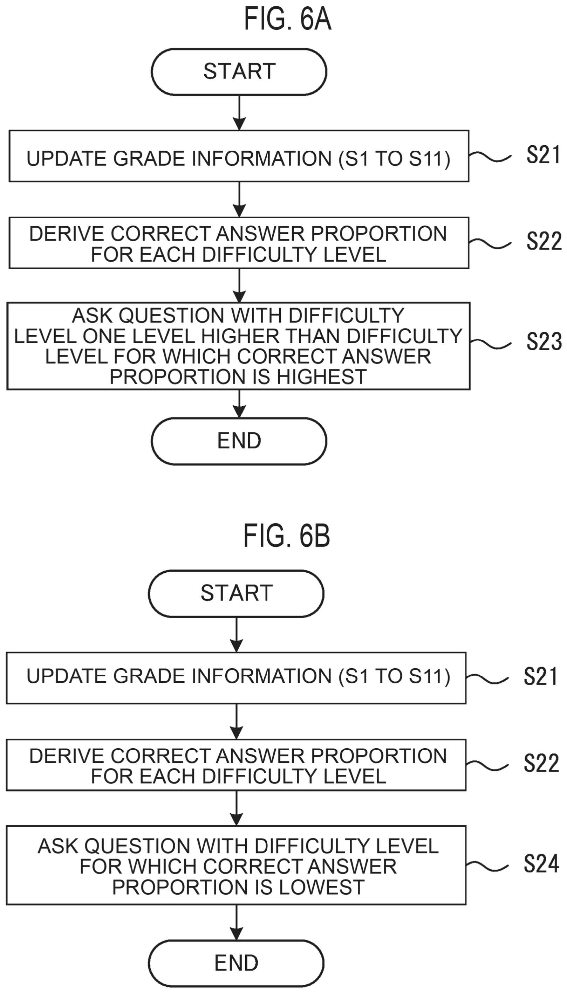

For example, in the case shown in FIGS. 6A and 6B, the grade information is updated in S21. The process in S21 corresponds to S1 to S11 shown in FIG. 5, and the grade information is updated according to whether the answer of the user is a correct answer or an incorrect answer. In this case, the deemed correct answer addition process in S9 or the deemed incorrect answer addition process in S11 may be executed. Subsequently, in S22, the correct answer proportion deriving unit 12c shown in FIG. 1 derives the correct answer proportion for each difficulty level.

In the embodiment shown in FIG. 6A, in S23, the processor 12 specifies a difficulty level one level higher than the difficulty level corresponding to which the correct answer proportion is the highest, and a question with the specified difficulty level is asked. In this case, the display processor 12b displays, on the display unit 14, a question with a difficulty level one level higher than the difficulty level corresponding to which the correct answer proportion is the highest. In a case where the correct answer proportions for the plurality of difficulty levels are the same proportion and the highest, the display processor 12b may display, on the display unit 14, a question with a difficulty level one level higher than the highest difficulty level among the plurality of difficulty levels. According to this procedure, the learning level of the user can be efficiently improved. In the embodiment shown in FIG. 6B, in S24, the processor 12 asks a question with the difficulty level corresponding to which the correct answer proportion is the lowest. In this case, the display processor 12b displays, on the display unit 14, a question with the difficulty level corresponding to which the correct answer proportion is the lowest. In a case where the correct answer proportions for the plurality of difficulty levels are the same proportion and the lowest, the display processor 12b may display a question with the lowest difficulty level among the plurality of difficulty levels on the display unit 14. According to this procedure, the user can efficiently learn a field that the user is not good at.

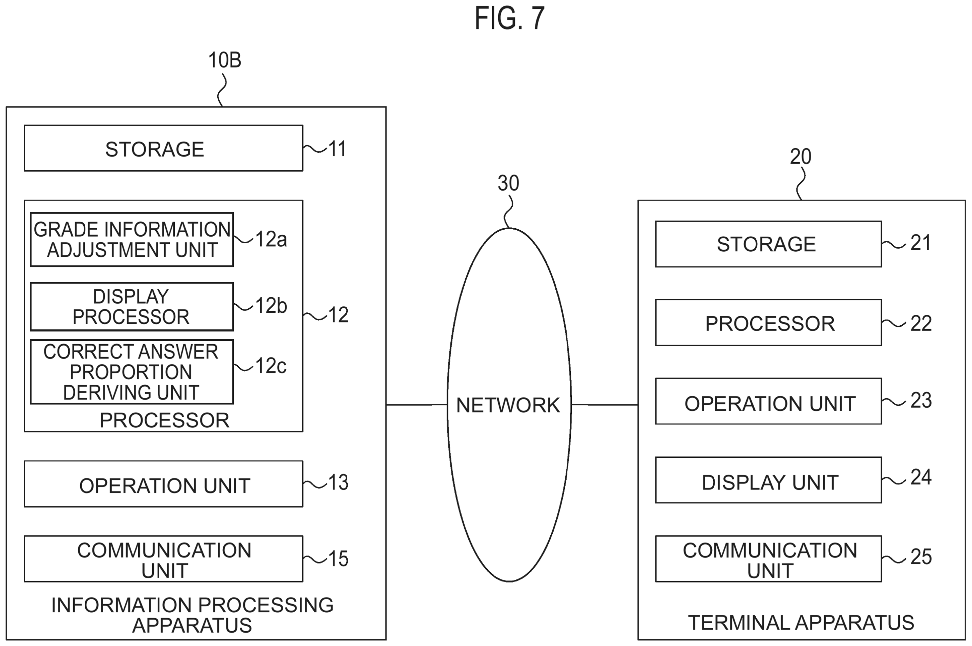

In the embodiment shown in FIG. 1, the information processing apparatus 10 is a personal computer or the like directly operated by a user. On the other hand, an information processing apparatus (learning support apparatus) 10B shown in FIG. 7 provides substantially the same function as the information processing apparatus 10 shown in FIG. 1, but is a server computer that receives access from a terminal apparatus 20. Therefore, the information processing apparatus 10B includes a communication unit (first communication unit) 15 for communicating with other devices (in FIG. 7, the terminal apparatus 20) via a network 30. Note that the information processing apparatus 10B can communicate with a plurality of terminal apparatuses by using the communication unit 15. That is, the information processing apparatus 10B can provide a learning support service to a plurality of users. Furthermore, the information processing apparatus 10B need not include the operation unit 13 and/or the display unit 14 shown in FIG. 1.

The terminal apparatus (information processing apparatus) 20 is a personal computer, a smartphone, a tablet, a PDA, or the like used by the user. The terminal apparatus 20 includes a storage device 21 as at least one memory, a processor (second processor) 22 as at least one processor, an operation unit 23, a display unit 24, and a communication unit (second communication unit) 25. The storage device 21 stores a program used by the terminal apparatus 20. The processor 22 controls an operation of the terminal apparatus 20. The operation unit 23 is an input device included in the terminal apparatus 20, and is a keyboard, a pointing device such as a mouse, a touch panel, and/or a microphone. The display unit 24 is a display device implemented as a part of the terminal apparatus 20 or a display device connected to the terminal apparatus 20. The communication unit 25 communicates with other devices (in FIG. 7, the information processing apparatus 10B) via the network 30.

The network 30 may include a public network, a private network, or a public network and a private network. Furthermore, the network 30 may include a wireless network, a wired network, or a wireless network and a wired network.

In a communication system having the above configuration, in response to a request from the terminal apparatus 20 (alternatively, a user of the terminal apparatus 20), the information processing apparatus 10B asks a question to the user. This question is displayed on the display unit 24 of the terminal apparatus 20, and the user answers the question by using the terminal apparatus 20. Upon receiving the answer that is input by using the terminal apparatus 20, the information processing apparatus 10B updates the grade information according to the flowchart shown in FIG. 5, and asks the next question to the user as necessary. As described above, in the configuration shown in FIG. 7, the terminal apparatus 20 does not need to have the function of determining whether an answer is correct or incorrect and the function of creating and updating grade information, and operates as a display device that provides an interface with the user while being connected to the information processing apparatus 10B operating as a server computer. That is, it is not necessary to install the learning support program according to the embodiment of the present disclosure in the terminal apparatus 20. Furthermore, the information processing apparatus 10B can collectively manage a plurality of users.

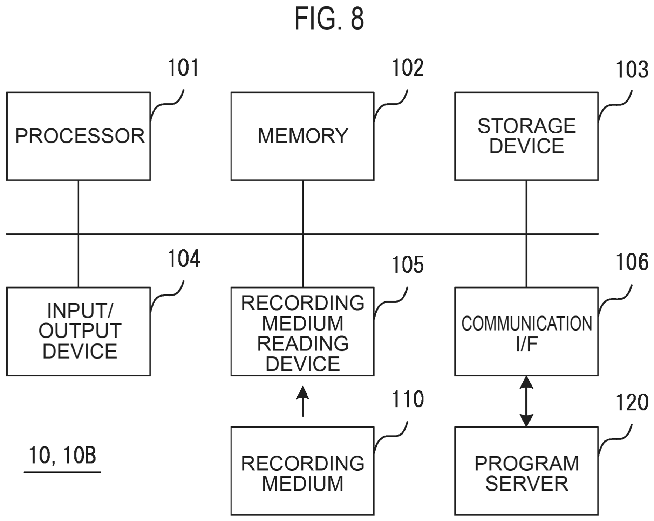

As shown in FIG. 8, the information processing apparatuses 10 and 10B include a processor 101, a memory 102, a storage device 103, an input/output device 104, a recording medium reading device 105, and a communication interface 106. The processor 101 includes, for example, a central processing unit (CPU). The processor 101 operates as the processor 12 and executes a learning support program stored in the storage device 103. The learning support program includes a program code describing the processing in the flowcharts shown in FIGS. 5 to 6. That is, the processor 101 provides a function of updating the grade information and a function of asking a question to the user on the basis of the grade information. The memory 102 is used as a work area of the processor 101. The storage device 103 includes non-transitory computer readable storage media such as a random access memory (RAM) and a read only memory (ROM), and stores the above-described learning support program and other programs. Note that the storage 11 is realized by the memory 102 and the storage device 103.

The input/output device 104 corresponds to the operation unit 13 and the display unit 14 shown in FIG. 1. Furthermore, the input/output device 104 may include an input device such as a keyboard, a mouse, a touch panel, or a microphone, and an output device such as a display device or a speaker. The recording medium reading device 105 can acquire data and information recorded on the recording medium 110. The recording medium 110 is a removable recording medium attachable to and detachable from the information processing apparatuses 10 and 10B, and is realized by, for example, a semiconductor memory, a medium that records a signal through an optical action, or a medium that records a signal through a magnetic action. The learning support program may be provided from the recording medium 110 to the information processing apparatuses 10 and 10B. The communication interface 106 provides a function of connecting to a network. Note that when the learning support program is stored in the program server 120, the information processing apparatuses 10 and 10B may acquire the learning support program from the program server 120.

## Claims

1. A learning support program that instructs a processor (12) of an information processing apparatus (10) to execute:
managing grade information indicating whether a user has correctly or incorrectly answered a question associated with a difficulty level, and
adjusting the grade information by executing at least one of:
deemed correct answer addition of adding, to the grade information, information indicating that the user has correctly answered a question with a second difficulty level lower than a first difficulty level a second predetermined number of times corresponding to a first predetermined number of times in which the user has correctly answered the question with the first difficulty level the first predetermined number of times, and
deemed incorrect answer addition of adding, to the grade information, information indicating that the user has incorrectly answered a question with a fourth difficulty level higher than a third difficulty level a fourth predetermined number of times corresponding to a third predetermined number of times in which the user has incorrectly answered the question with the third difficulty level the third predetermined number of times.

2. The learning support program according to claim 1, wherein
the learning support program instructs the processor (12) to display, on a predetermined display unit (14), a correct/incorrect status of an answer of the user to the question, the correct/incorrect status being indicated by the grade information.

3. The learning support program according to claim 1, wherein
the grade information is adjusted by:
changing the first predetermined number of times to a fifth predetermined number of times larger than the first predetermined number of times in a case where the number of answers of the user in the grade information exceeds a predetermined threshold and the deemed correct answer addition is executed, and
changing the third predetermined number of times to a sixth predetermined number of times larger than the third predetermined number of times in a case where the number of answers of the user in the grade information exceeds a predetermined threshold and the deemed incorrect answer addition is executed.

4. The learning support program according to claim 1, wherein
the learning support program instructs the processor (12) to:
derive a correct answer proportion for each of the difficulty levels on the basis of the grade information; and
display, on a predetermined display unit (14), a question with a difficulty level one level higher than a difficulty level corresponding to which the correct answer proportion is the highest among the difficulty levels, or to display, on the display unit (14), a question with a difficulty level corresponding to which the correct answer proportion is the lowest among the difficulty levels.

5. The learning support program according to claim 1, wherein
the grade information is adjusted by changing content of grade information corresponding to a question that the user has incorrectly answered among pieces of the grade information to content indicating that the user has correctly answered when the user inputs information indicating that the user has incorrectly answered although the user has understood the question that the user has incorrectly answered.

6. An information processing apparatus (10) comprising a processor (12), wherein
the processor (12):
manages grade information indicating whether the user has correctly or incorrectly answered a question associated with a difficulty level, and
executes at least one of:
deemed correct answer addition of adding, to the grade information, information indicating that the user has correctly answered a question with a second difficulty level lower than a first difficulty level a second predetermined number of times corresponding to a first predetermined number of times in which the user has correctly answered the question with the first difficulty level the first predetermined number of times, and
deemed incorrect answer addition of adding, to the grade information, information indicating that the user has incorrectly answered a question with a fourth difficulty level higher than a third difficulty level a fourth predetermined number of times corresponding to a third predetermined number of times in which the user has incorrectly answered the question with the third difficulty level the third predetermined number of times.

7. A learning support method executed by a computer, the learning support method comprising:
managing grade information indicating whether a user has correctly or incorrectly answered a question associated with a difficulty level, and
executing at least one of:
deemed correct answer addition of adding, to the grade information, information indicating that the user has correctly answered a question with a second difficulty level lower than a first difficulty level a second predetermined number of times corresponding to a first predetermined number of times in which the user has correctly answered the question with the first difficulty level the first predetermined number of times, and
deemed incorrect answer addition of adding, to the grade information, information indicating that the user has incorrectly answered a question with a fourth difficulty level higher than a third difficulty level a fourth predetermined number of times corresponding to a third predetermined number of times in which the user has incorrectly answered the question with the third difficulty level the third predetermined number of times.

8. A system comprising:
a learning support apparatus (10) including:
a storage (11) that stores grade information indicating whether a user has correctly or incorrectly answered a question associated with a difficulty level, and
a first processor (12) that:
manages the grade information,
adjusts the grade information by executing at least one of deemed correct answer addition of adding, to the grade information, information indicating that the user has correctly answered a question with a second difficulty level lower than a first difficulty level a second predetermined number of times corresponding to a first predetermined number of times in which the user has correctly answered the question with the first difficulty level the first predetermined number of times, and deemed incorrect answer addition of adding, to the grade information, information indicating that the user has incorrectly answered a question with a fourth difficulty level higher than a third difficulty level a fourth predetermined number of times corresponding to a third predetermined number of times in which the user has incorrectly answered the question with the third difficulty level the third predetermined number of times, and performs display control to generate data for displaying a correct/incorrect status of an answer of the user to the question, indicated by the grade information, on a display unit (14) included in an information processing apparatus (20) and to transmit the data to the information processing apparatus (20) via a first communication unit (15); and
the information processing apparatus (20) including:
the display unit (24), and
a second processor (22) that displays the correct/incorrect status on the display unit (24) on the basis of the data acquired via a second communication unit (25).
